**Europäisches Patentamt**

**European Patent Office**

**Office européen des brevets**

(19)

(11) Veröffentlichungsnummer : **0 047 893**
**B1**

(12) # EUROPÄISCHE PATENTSCHRIFT

(45) Veröffentlichungstag der Patentschrift :
11.12.85

(51) Int. Cl.⁴ : **H 02 P 5/40**

(21) Anmeldenummer : 81106680.2

(22) Anmeldetag : 27.08.81

(54) Vorrichtung zum feldorientierten Betrieb einer umrichtergespeisten Asynchronmaschine.

(30) Priorität : 11.09.80 DE 3034252

(43) Veröffentlichungstag der Anmeldung :
24.03.82 Patentblatt 82/12

(45) Bekanntmachung des Hinweises auf die Patenterteilung : 11.12.85 Patentblatt 85/50

(84) Benannte Vertragsstaaten :
AT CH DE FR GB IT LI NL SE

(56) Entgegenhaltungen :
EP-A- 0 007 550
EP-A- 0 043 973
"Messen, Steuern, Regeln; Automatisierungspraxis", msr 18 ap (1975), S. 269-280
D.Ernst, D. Ströle "Industrieelektronik, Grundlagen, Methoden, Anwendungen", Berlin, Heidelberg, New York, 1973, S. 204-208

(73) Patentinhaber : Siemens Aktiengesellschaft
Berlin und München Wittelsbacherplatz 2
D-8000 München 2 (DE)

(72) Erfinder : Schwesig, Günter
Drosselweg 15
D-8520 Erlangen (DE)
Erfinder : Blaschke, Felix, Dr.
Steinforststrasse 19
D-8520 Erlangen (DE)

## 0 047 893

**Beschreibung**

Die Erfindung bezieht sich auf eine Vorrichtung zum Betrieb einer umrichtergespeisten Asynchronmaschine mit einem Flußrechner, der aus Werten für den Ständerstromvektor, den gemessenen Läuferdrehwinkel und den Parameterwertfür den bäuferwiderstand den Flußvektor ermittelt, und einer Umrichtersteuerung, die aus der ermittelten Lage des Flußvektors und eingegebenen, die zum Flußvektor parallele und die dazu senkrechte Komponente des Ständerstromvektors festlegenden Sollwerten die Steuergrößen für die Ansteuerung der Umrichterventile bildet.

Eine solche Vorrichtung ist aus « messen, steuern, regeln ; automatisierungspraxis » 12 (1975), S. 278-280 bekannt.

Beschreibt man das in der Asynchronmaschine herrschende magnetische Feld durch einen in Richtung der Feldachse liegenden Flußvektor und setzt die in den Ständerwicklungen fließenden Ströme zu einem Stromvektor zusammen, so ist es für umrichtergespeiste Asynchronmaschinen vorteilhaft, die Ständerströme so zu steuern, daß mit der zum Flußvektor parallelen Komponente des Ständerstroms (Magnetisierungsstrom) der Fluß z. B. auf einem konstanten Betrag gehalten und mit der zum Flußvektor senkrechten Komponente (Wirkstrom) ein gewünschter Wert des Drehmomentes oder der Drehzahl eingestellt werden kann. Ein derartiger feldorientierter Betrieb ist aus der deutschen Patentschrift 19 41 312 bekannt. Dabei werden Sollwerte vorgegeben, die den Ständerstromvektor in einem mit dem Flußvektor rotierenden (« feldorientierten ») Koordinatensystem in Betrag und Winkel oder in den kartesischen Komponenten festlegen. Um daraus entsprechende Steuergrößen für den vom Umrichter zu liefernden Ständerstrom zu gewinnen, muß der feldorientiert vorgegebene Ständerstrom-Sollvektor in das ortsfeste Bezugssystem der Ständerwicklungen transformiert werden, wozu eine Information über die Lage des Flußvektors benötigt wird.

Die Information kann durch einen Flußrechner aus den entsprechenden Werten von Ständerstrom und Ständerspannung gewonnen werden. Nach der DE-PS 1 806 769 kann dies dadurch geschehen, daß von der Sternspannung einer Maschinenklemme der ohmsche Spannungsabfall an der betreffenden Ständerwicklung, der gegeben ist durch das Produkt aus dem Strom durch die Ständerwicklung und dem ohmschen Widerstand, sowie der induktive Spannungsabfall, der gegeben ist aus dem Produkt aus der betreffenden Streuinduktivität und der zeitlichen Ableitung des Leiterstromes, abgezogen wird. Dadurch wird die an der Wicklung auftretende EMK gebildet, aus der durch Integration der in Richtung der betreffenden Wicklungsachse induzierte Fluß errechnet wird. Ebenso wie beim Ständerstrom handelt es sich bei den Ständerspannungen, ohmschen Spannungsabfällen, Streuspannungen, der EMK und dem Fluß um vektorielle Grössen, die jeweils aus den zu den einzelnen Ständerwicklungen gehörenden Einzelgrößen zu einem gemeinsamen Vektor zusammengesetzt werden können. Bei einer dreiphasigen Drehfeldmaschine können demnach durch Erfassung der EMK bzw. des Flusses in zwei Ständerwicklungen zwei Komponenten des EMK-Vektors bzw. des Flußvektors in einem von zwei, einen Winkel von 120° einschließenden Wicklungsachsen aufgespannten Koordinatensystem ermittelt werden, wobei es durch einen Koordinatenwandler möglich ist, von diesem schiefwinkeligen Koordinatensystem in ein entsprechendes, ortsfestes kartesisches Koordinatensystem überzugehen, das im weiteren mit den Indizes $\alpha,\beta$ bezeichnet ist im Gegensatz zu den mit $\varphi 1$ und $\varphi 2$ gekennzeichneten feldorientierten Koordinaten. Die Umrechnung kann am Ausgang des Flußrechners vorgenommen werden, sie kann aber bereits bei der Erfassung von Ständerstrom und Ständerspannung erfolgen, so daß dem Flußrechner der Ständerstromvektor und der Ständerspannungsvektor im schiefwinkeligen oder im kartesischen Koordinatensystem vorgegeben werden kann. Ferner ist es auch möglich, die vom EMK-Vektor zum Flußvektor führende Integration bereits nach der Subtraktion des ohmschen Spannungsabfalles vom Ständerspannungsvektor vorzunehmen und zur Berücksichtigung der induktiven Streuspannung nach der Integration das Produkt aus Streuinduktivität und Ständerstrom abzuziehen. Ein derartiger Flußrechner ist z. B. aus der deutschen Patentschrift 28 33 542 bekannt.

Dieser Flußrechner, der im wesentlichen vom Ständerspannungsvektor ausgeht und durch Integration der EMK den Flußvektor bildet, kann als « Spannungsmodell » bezeichnet werden. Dieses Modell genügt oft auch ohne genaue Kenntnis des Ständerwiderstandes den Ansprüchen hinsichtlich Genauigkeit und Regeldynamik beim Betrieb einer Asynchronmaschine, sofern die Ständefrequenz der Asynchronmaschine etwa 10 % der Nennfrequenz übersteigt. Der Spannungsabfall am Ständerwiderstand ist dann nämlich gegenüber der EMK vernachlässigbar, so daß eine ungenaue Erfassung und Einstellung des ohmschen Spannungsabfalls bei der Flußerfassung weniger stört. Für niedrigere Frequenzen jedoch ist eine exakte Bestimmung des Flusses von der genauen Kenntnis des temperaturabhängigen Ständerwiderstandes $R^S$ abhängig. Ferner benötigt das beim Spannungsmodell eingesetzte offene Integrationsverfahren zur Vermeidung einer Nullpunktdrift eine aufwendige adaptive Gleichanteilregelung, die bei niedrigen Frequenzen zu einer Verfälschung bei der Flußerfassung führt und zudem die Regeldynamik auch im oberen Frequenzbereich beeinträchtigt.

Daneben ist es auch bekannt, wie eingangs erwähnt den Flußvektor einer Asynchronmaschine durch ein sogenanntes « Strommodell » zu ermitteln, das von Meßwerten des Ständerstromes und der Läuferstellung ausgeht und die zur Ausbildung des Flusses gehörenden Vorgänge in der Maschine nachbildet. In der nicht vorveröffentlichten EP-Al-0 043 973 ist eine Einrichtung bekannt, die von einem

2

Spannungsmodell ausgeht, um durch Integration der gemessenen EMK für höhere Frequenzen den Fluß zu bilden; für niedrigere Frequenzen ist jedoch das Strommodell zur Bildung des Flusses aus den Strommeßwerten und der Läuferstellung vorgesehen. Der Strommodell-Fluß ist als Nullpunkt einem Nullpunktregler für den Spannungsmodell-Fluß aufgeschaltet, so daß der Spannungsmodell-Fluß dem Strommodell-Fluß nachgeführt und bei niedrigen Frequenzen entsprechend korrigiert wird.

Das Strommodell ist jedoch umso ungenauer, je mehr der dort benötigte Parameter des (an sich meßtechnisch nicht erfaßbaren und betriebsmäßig veränderlichen) Läuferwiderstandes vom tatsächlichen aktuellen Läuferwiderstand abweicht. Daher ist in der prioritätsgleichen, nicht vorveröffentlichten EP-AI-47 900 vorgeschlagen, den Fluß sowohl mittels eines Strommodells wie mittels eines Spannungsmodells zu errechnen. Die Abweichung der beiden Flüsse ist ein Maß für die Fehleinstellung des im Strommodell verwendeten Läuferwiderstands-Parameters, da beide Modelle vom gleichen Strommeßwert ausgehen. Daher kann der wahre Läuferwiderstand mittels eines Reglers gewonnen werden, der den Läuferwiderstands-Parameter auf minimale Differenz der beiden errechneten Flüsse justiert. Der auf diese nicht vorveröffentlichte Weise gewonnene Läuferwiderstandsparameter kann überall da verwendet werden, wo eine Information über den betriebsmäßig veränderlichen, aktuellen Läuferwiderstand benötigt wird, insbesondere also bei einer Modellschaltung, die einen Modellfluß als Istwert für den feldorientierten Betrieb einer Asynchronmaschine errechnet.

Von dem eingangs genannten Strommodell ausgehend, ist es die Aufgabe der vorliegenden Erfindung, eine andere Möglichkeit anzugeben, um aus den Spannungsmeßwerten auch bei niedrigen Frequenzen eine gute Flußerfassung und im ganzen Frequenzbereich eine hohe dynamische Genauigkeit zu erreichen.

Dies wird erreicht durch eine Rechenschaltung, die den Wert des Ständesstromvektors aus dem errechneten Wert des Flußvektors und dem eingegebenen Istwert des Ständerspannungsvektors berechnet.

Während beim bekannten Spannungsmodell nur der EMK-Vektor der Maschine bestimmt und daraus durch Integration der Fluß berechnet wird, werden also gemäß der Erfindung im Flußrechner, ausgehend vom Ständerspannungsvektor und dem Läuferachsen-Drehwinkel, die Differentialgleichungen für Ständerstromvektor, Ständerspannungsvektor, EMK-Vektor und Flußvektor gelöst. Als weiterer Maschinenparameter sind im Flußrechner Parameterwerte für die Hauptinduktivität und die Streuinduktivität verwendet, die jedoch nur wenig veränderlich sind und unabhängig von dieser Erfindung eingestellt sind. Anstelle des beim bekannten Spannungsmodell erforderlichen Ständerstromvektors wird eine Information über die Lage bzw. die Bewegung der Läuferachse verwendet. Dadurch wird eine gute Übereinstimmung zwischen Modell und Maschine hinsichtlich der Dynamik erreicht.

Da in die Lösung der Differentialgleichungen vor allem die Parameterwerte für den Ständerwiderstand und den Läuferwiderstand eingehen, ist die Genauigkeit des Modells davon abhängig, inwieweit die im Modell verwendeten Parameter für Läuferwiderstand und Ständerwiderstand mit den entsprechenden Maschinenparametern übereinstimmen. Es ist daher vorteilhaft, wenn der Flußrechner für den Parameterwert des Ständerwiderstandes und/oder des Läuferwiderstandes Eingabeeingänge zur Eingabe verstellbarer Parameterwerte enthält.

Zur Eingabe eines mit dem Läuferwiderstand gut übereinstimmenden Läuferwiderstand-Parameterwertes ist es gemäß einer im Anspruch 3 genannten Ausführungsform der Erfindung vorteilhaft, am Flußrechner eine Größe abzugreifen, die den bei der Lösung der Gleichungen im Flußrechner ermittelten Ständerstromvektor bestimmt. Da es sich bei dem Ständerstromvektor um einen senkrecht zur Rotationsachse umlaufenden Vektor handelt, der durch Betrag und Winkel oder durch seine Komponenten in einem gegebenen Koordinatensystem bestimmt ist, kann als Bestimmungsgröße dieses Vektors vorteilhaft die zum eingegebenen Ständerspannungsvektor senkrechte oder parallele Komponente oder insbesondere der Betrag des Ständerstromvektors verwendet werden. Aus den an der Asynchronmaschine abgegriffenen Ständerströmen wird eine entsprechende, den Ständerstromvektor der Maschinen bestimmende Größe gebildet. Am Eingabeeingang für den Läuferwiderstand-Parameterwert ist ein integraler Regler vorgesehen, dem die Differenz der beiden bestimmenden Größen zugeführt ist.

Bei dieser Ausführungsform wird davon ausgegangen, daß der Maschine und dem Flußrechner der gleiche Ständerspannungsvektor vorgegeben ist. Folglich gelten auch die gleichen Kreisdiagramme, wobei sich lediglich die Schlupfskalen unterscheiden, falls Maschine und Modell von unterschiedlichen Läuferwiderständen ausgehen. Da jedoch dem Flußrechner die tatsächliche Drehbewegung des Läufers eingegeben ist, ermittelt der Flußrechner einen vom tatsächlichen Ständerstromvektor verschiedenen Modell-Ständerstromvektor. Durch den integralen Regler wird nun der Parameterwert für den Läuferwiderstand solange verstellt, bis der Modell-Ständerstromvektor dem tatsächlichen Ständerstromvektor nachgeführt ist. Nach erfolgtem Abgleich der Ständerstromvektoren herrscht dann gute Übereinstimmung zwischen dem tatsächlichen Läuferwiderstand und dem entsprechendem Parameterwert.

Gemäß einer anderen, im Anspruch 4 genannten Ausführungsform der Erfindung wird zum Einstellen des Parameterwertes für den Läuferwiderstand der EMK-Vektor der Maschine einem entsprechendem EMK-Modellvektor nachgeführt. Zur Bildung des EMK-Vektors der Maschine wird ein EMK-Detektor verwendet, wie er als Flußrechner beim eingangs genannten Stand der Technik bekannt ist. Dieser EMK-Detektor ermittelt aus Ständerstrom und Ständerspannung eine die EMK der Maschine bestimmende Größe. Auch bei der EMK handelt es sich um einen ebenen Vektor, so daß als Bestimmungsgröße der Betrag oder besonders vorteilhaft die zum eingegebenen Ständerstromvektor parallele oder insbesondere die dazu senkrechte Komponente (Blindkomponente) verwendet werden kann. Ferner ist eine die zur Entstehung des magnetischen Flusses in der Maschine führenden Vorgänge nachbildende Rechenmodellschaltung vorgesehen, die ausgehend von den Ständerströmen, der Läuferstellung der Maschine und einem einstellbaren Parameterwert für den Läuferwiderstand einen Modell-Flußvektor errechnet. In einer Rechenstufe wird die Differenz aus der die Maschinen-EMK bestimmenden Größe und einer aus dem Modell-Flußvektor abgeleiteten, die dazugehörige EMK des Modells bestimmenden Größe gebildet. Die Differenz dieser Größen wird einem Läuferwiderstandparameter-Regler zugeführt, dessen Ausgang einerseits dem Eingabeeingang für den Läuferwiderstand-Parameterwert der Rechenmodellschaltung und andererseits dem Eingabeeingang für den Läuferwiderstand-Parameterwert des Flußrechners zugeführt ist.

Diese Ausführungsform geht davon aus, daß der Rechenmodellschaltung und der Maschine der gleiche Ständerstromvektor vorgegeben ist, so daß auch hier deckungsgleiche Kreisdiagramme gelten, die lediglich in der vom Läuferwiderstand abhängigen Schlupfskalierung unterschiedlich sind. Da der Läuferdrehwinkel der Maschine auch dem Rechenmodell eingeprägt ist, ermittelt die Rechenmodellschaltung daher für den vorgegebenen Schlupf einen Modell-EMK-Vektor, der vom EMK-Vektor der Maschine abweicht, wenn in der Rechenmodellschaltung für den Läuferwiderstand ein vom Läuferwiderstand der Maschine abweichender Parameterwert eingegeben ist. Der Läuferwiderstand-Parameterwert des Rechenmodells wird nun solange verändert, bis der EMK-Modellvektor dem Maschinen-EMK-Vektor nachgeführt ist. Nach erfolgtem Abgleich stimmt der im Rechenmodell verwendete Parameterwert gut überein mit dem Läuferwiderstand der Maschine. Daher kann der am Läuferwiderstandparameter-Regler anstehende Wert dann auch als Läuferwiderstand-Parameterwert dem Flußrechner eingegeben werden.

Dabei wird vorteilhaft in der Rechenstufe durch Differentiation des Modell-Flußvektors ein EMK-Modellvektor gebildet. Der vom Detektor gebildete EMK-Vektor und der EMK-Modellvektor wird einer Einrichtung zugeführt, die wenigstens einen Vektoranalysator zur Betragsbildung und ein Subtraktionsglied enthält, um die Differenz der Beträge der Vektoren zu bilden. Die Einrichtung kann aber neben dem Subtraktionsglied auch wenigstens einen Vektordreher anstelle eines Vektoranalysators enthalten. Dem Vektordreher ist ein an einem Vektoranalysator aus dem Ständerstromvektor gebildetes Signal zugeführt, das die Lage des Ständerstromvektors im ortsfesten Bezugssystem beschreibt. Der Vektordreher führt dann eine Koordinatentransformation der eingegebenen Vektorgrößen vom Ständerbezugssystem (Indizes α, β) in ein mit dem Ständerstromvektor umlaufendes Bezugssystem (Indizes j1, j2) durch. Daher liefert die Einrichtung zwei Koordinaten, die der vektoriellen Differenz des Maschinen-EMK-Vektors und des EMK-Modellvektors im mit dem Ständerstrom umlaufenden Bezugssystem entsprechen. Zum Abgleich der EMK-Vektoren wird dann eine der Koordinaten in diesem rotierenden Bezugssystem verwendet. Vorteilhaft wird die zum Ständerstrom senkrechte Komponente (Blindkomponente) verwendet. Die Blindkomponente des Maschinen-EMK-Vektors ist stets gleich der Blindkomponente eines Summenvektors aus EMK-Vektor und ohmschen Spannungsabfall, da der ohmsche Spannungsabfall stets nur ein Abfall der Wirkspannung ist und somit einen parallel zum Ständerstrom liegenden Vektor darstellt. Dieser Summenvektor kann auf einfache Weise dadurch gebildet werden, daß im EMK-Detektor vom Ständerstromvektor lediglich der induktive Streuspannungsabfall, d. h. das Produkt aus Streuinduktivität und der zeitlichen Ableitung des Ständerstromes, subtrahiert wird. Die Blindkomponente dieses Summenvektors wird als EMK-Vektor bestimmende Größe dem Regler zusammen mit der den EMK-Modell-Vektor bestimmenden Blindkomponente des EMK-Modellvektors zugeführt.

Dabei kann ausgenutzt werden, daß sich die zum Ständerstromvektor parallele Komponente (Wirkkomponente) des Summenvektors von der Wirkkomponente des Maschinen-EMK-Vektors (bzw. nach erfolgtem Abgleich von der Wirkkomponente des EMK-Modellvektors) nur um den ohmschen Spannungsabfall, also das Produkt aus Ständerwiderstand und Betrag des Ständerstromvektors, unterscheidet. Daher wird mit dem die Winkellage des Ständerstromvektors ermittelnden Vektoranalysator auch der Betrag des Ständerstromvektors gebildet und an den Divisoreingang eines Dividiergliedes gelegt. Gleichzeitig wird mit dem Vektordreher, der die Koordinatentransformation der Differenz aus Maschinen-EMK-Vektor und EMK-Modellvektor durchführt, auch die Wirkkomponente dieser vektoriellen Differenz berechnet. Diese Wirkkomponente der Vektordifferenz wird dem Dividendeneingang des Dividiergliedes zugeführt, so daß dessen Ausgang bei erfolgtem Abgleich der EMK-Blindkomponenten gleichzeitig einen abgeglichenen Parameterwert für den Ständerwiderstand liefert.

Diese Ausführungsform benötigt neben dem Flußrechner einen EMK-Detektor und eine Rechenmodellschaltung und ist daher verhältnismäßig aufwendig, sie zeichnet sich jedoch durch eine hohe Genauigkeit und eine gute Dynamik aus. Für geringere Anforderungen kann es auch vorteilhaft sein, zur Bestimmung des Ständerwiderstandes am Flußrechnereingang für den entsprechenden Parameterwert lediglich ein Rechenglied vorzusehen, das von der Ständertemperatur beaufschlagt ist und durch Korrektur eines temperaturunabhängig eingestellten Ausgangswertes mit einer im Rechenglied eingespeicherten Temperatur-Korrekturfunktion einen temperaturabhängigen Läuferwiderstand-Parameterwert bildet. Die Berücksichtigung der Temperatur der Ständerwicklung kann auf einfache Weise dadurch geschehen, daß der temperaturunabhängige Ausgangswert mit der Ständerwicklungstemperatur multipliziert wird.

4

Anhand von mehreren Ausführungsbeispielen und Figuren wird die Erfindung näher erläutert.

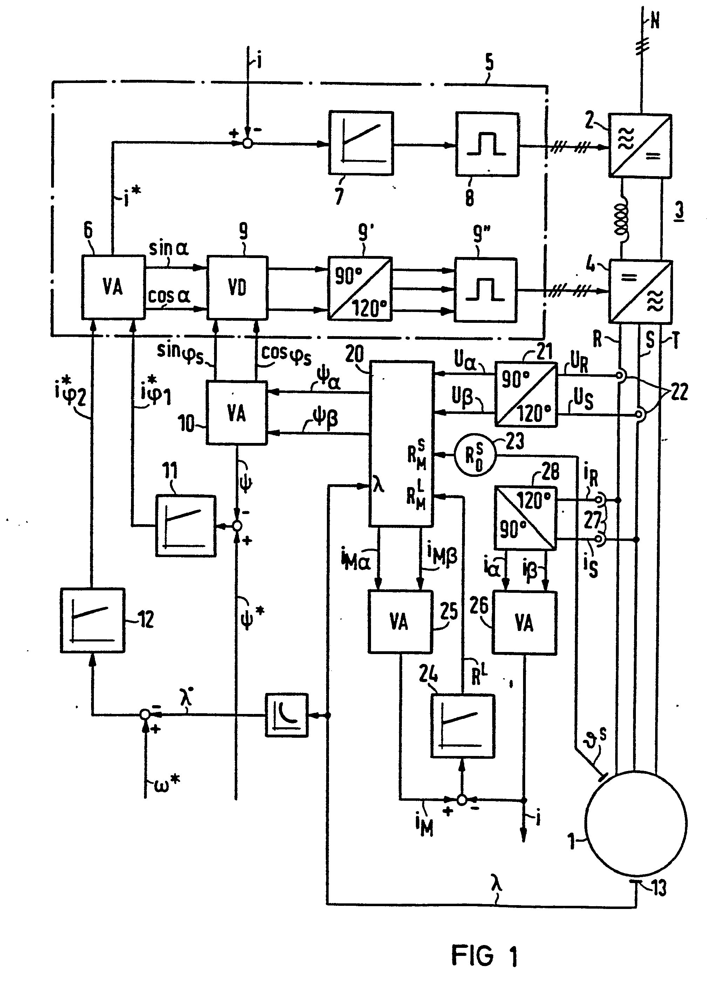

Nach Figur 1 wird eine Asynchronmaschine 1 aus einem dreiphasigen Netz N über einen Umrichter gespeist, der aus einem netzgeführten Gleichrichter 2, einem Zwischenkreis 3 mit eingeprägtem Zwischenkreisstrom und einem selbstgeführten Wechselrichter 4 besteht. Für die Zündung der Umrichterventile ist eine Umrichtersteuerung 5 vorgesehen, der ein Ständerstrom-Sollvektor $\underline{i}^*$ dadurch vorgegeben ist, daß die zur Feldachse parallele Komponente $i\varphi_1{}^*$ (Magnetisierungsstrom) und die dazu senkrechte Komponente $i\varphi_2{}^*$ getrennt eingegeben werden. Ein Vektoranalysator 6 ermittelt daraus den Betrag $i^*$ des Sollvektors, der mit dem Istwert des Ständerstrombetrages $i$ verglichen und einem Stromregler 7 eingegeben ist, um aus der Regelabweichung eine Steuergröße für das Zündsteuergerät 8 des Gleichrichters 2 zu liefern. Der Vektoranalysator 6 liefert ferner die Projektionen eines Einheitsvektors auf die beiden feldorientierten Koordinatenachsen, wobei der Einheitsvektor als Steuervektor die Lage des Ständerstromsollvektors $\underline{i}^*$ in dem feldorientierten Koordinatensystem beschreibt, das gegenüber einem ortsfesten kartesischen Bezugssystem (Ständerbezugssystem) um den Flußwinkel $\varphi_s$ gedreht ist. Die Projektionen sin $\alpha$, cos $\alpha$ dieses Einheitsvektors werden in das Ständerbezugssystem mittels eines Vektordrehers 9 transformiert, dem Projektionen sin $\varphi_s$, cos $\varphi_s$ eines in Richtung der Feldachse weisenden Einheitsvektor eingegeben sind. Diese Winkelinformation über die Lage der Feldachse werden an einem Vektoranalysator 10 abgegriffen, dem die Komponenten $\psi\alpha$, $\psi\beta$ des Flußvektors $\underline{\psi}$ im Ständerbezugssystem eingegeben sind. Am Ausgang des Vektordrehers 9 stehen nunmehr die Komponenten des Steuervektors im kartesischen Ständerbezugssystem an, aus denen in einem Koordinatenwandler 9' die Komponenten bezüglich dreier, um $120°$ gegeneinander versetzter, zu den Ständerwicklungsachsen paralleler Achsen gebildet werden. Der Koordinatenwandler 9' liefert somit die Steuerspannungen für das Zündsteuergerät 9" des selbstgeführten Wechselrichters 4.

Da die feldparallele Komponente $i^*\varphi_1$ über den Magnetisierungsstrom den Betrag des Flusses bestimmt, kann bei einem geregelten Betrieb der Asynchronmaschine der Sollwert $i^*\varphi_1$ für den Magnetisierungsstrom von einem Flußregler 11 gebildet werden, dem die Regelabweichung zwischen dem Flußsollwert $\psi^*$ und dem am Vektoranalysator 10 gebildeten Betrag des Flußvektors $\psi$ zugeführt ist. Über den Sollwert $i^*\varphi_2$ der feldsenkrechten Ständerstromkomponente (Wirkstrom) kann das Drehmoment bzw. die Drehzahl der Asynchronmaschine gesteuert werden, wozu z. B. ein Drehzahlregler 12 vorgesehen ist, der aus der Regelabweichung zwischen einer vorgegebenen Solldrehzahl $\omega^*$ und einem entsprechenden Istwert, der als zeitliche Ableitung $\lambda$ der über einem Läuferstellungsgeber 13 abgegriffenen Läuferstellung (Polradwinkel $\lambda$) den zur Einstellung der Solldrehzahl nötigen Wirkstrom bildet.

Gemäß der Erfindung wird die Winkelinformation (sin $\varphi_s$ und cos $\varphi_s$) über den Flußvektor von einem Flußrechner 20 geliefert. Im Flußrechner 20 ist der vom Läuferstellungsgeber 13 abgegriffene Winkel $\lambda$ der Läuferachse sowie der Ständerspannungsvektor $\underline{U}$ eingegeben. Der Ständerspannungsvektor $\underline{U}$ ist beim Ausführungsbeispiel nach Figur 1 in Form seiner beiden Komponenten $U\alpha$, $U\beta$ im kartesischen Ständerbezugssystem vorgegeben, die mittels eines Koordinatenwandlers 21 aus entsprechenden Spannungswandlern an zwei Maschinenzuleitungen R, S abgegriffen sind. Prinzipiell ist die Vorgabe des Ständerspannungsvektors $\underline{U}$ auch in einem anderen Koordinatensystem, z. B. einem läuferbezogenen Koordinatensystem, möglich, da entsprechende Rechenbausteine zur Koordinatenumwandlung zur Verfügung stehen. Anstelle der Istwerte können bei einer entsprechend guten Regelung und einem Betrieb der Asynchronmaschine mit eingeprägter Spannung im gegebenen Fall auch die Sollwerte verwendet werden.

Das im Flußrechner zu lösende Gleichungssystem lautet :

Bei dem im Flußrechner zu lösenden PARKschen Gleichungssystem wird aus dem Ständerstrom $\underline{i}$ und dem Läuferstrom $\underline{i}^L$ ein Magnetisierungsstrom $\underline{i}\mu$

$$\underline{i}_\mu = \underline{i} + \underline{i}^L \tag{1}$$

gebildet. Entsprechend der Hauptinduktivität L, Ständer-Streuinduktivität $L\sigma^s$, die im Rahmen dieser Erfindung auch einfach als Streuinduktivität $L\sigma$ bezeichnet ist, und der Läufer-Streuinduktivität führt der Magnetisierungsstrom zum Aufbau eines Flusses $\underline{\psi}^s$ im Ständer und eines Flusses $\underline{\psi}^L$ im Läufer :

$$\underline{\psi}s = \underline{L}\underline{i}_\mu + L^{\sigma s}\,\underline{i} \tag{2}$$

$$\underline{\psi}^L = \underline{L}\underline{i}_\mu + L^{\sigma L}\,\underline{i}^L \tag{3}$$

Diese Vektorgleichungen sind wegen der Invarianz der Vektoraddition in jedem Koordinatensystem gültig. Die Umrechnung der im ständerbezogenen System (Indizes $\alpha$, $\beta$) gegebenen Stromkoordinaten in ein mit dem Läufer (Läuferstellungswinkel $\lambda$) umlaufendes Koordinatensystem (Koordinaten d, q) ist dabei durch eine entsprechende Drehmatrix $\underline{D}\,(\lambda)$ gegeben :

$$\underline{i}_{\mu\alpha\beta} = \underline{\underline{D}}(\lambda) \cdot i_{\mu d.q} \tag{4}$$

$$\underline{i}_{\alpha,\beta} = \underline{\underline{D}}(\lambda) \cdot \underline{i}_{d.q} \tag{4'}$$

In die Gleichungen für die Spannungen an den Ständer- und Läuferwicklungen gehen jedoch die zeitlichen Ableitungen der Flüsse $\underline{\psi}^s$ und $\underline{\psi}^L$ in Form der induzierten EMK ein. Diese Gleichungen sind nicht mehr invariant gegenüber Koordinatentransformationen. Vielmehr gilt für den Ständerspannungsvektor $\underline{u}$ im ständerbezogenen Koordinatensystem:

$$\underline{u}_{\alpha,\beta} = \underline{i}_{\alpha,\beta} \cdot R^s + \frac{d}{dt}\,\underline{\psi}^s_{\alpha,\beta}\,. \tag{5}$$

Analog ist die Spannungsgleichung für den Kurzschlußläufer der Asynchronmaschine im Läuferbezugssystem zu schreiben und es gilt

$$0 = \underline{i}^L_{d,q} \cdot R^L + \frac{d}{dt}\,\underline{\psi}^L_{d,q}\,. \tag{6}$$

Der Luftspaltfluß (Hauptfluß) $\underline{\psi}$ kann eingeführt werden durch

$$\underline{\psi} = L \cdot \underline{i}_\mu\,, \tag{I}$$

so daß aus (5) bzw. (6) und (2) folgt:

$$\underline{u}_{\alpha,\beta} = R^s \cdot \underline{i}_{\alpha,\beta} + L^{\sigma s}\frac{d}{dt}\underline{i}_{\alpha,\beta} + \frac{d}{dt}\,\underline{\psi}_{\alpha,\beta}\,, \tag{II}$$

$$0 = R^L \cdot \underline{i}^L_{d,q} + L^{\sigma L}\frac{d}{dt}\underline{i}^L_{d,q} + \frac{d}{dt}\,\underline{\psi}_{d,q} \tag{III}$$

wobei gilt

$$-\,\underline{i}^L_{d,q} = -\,\frac{\underline{\psi}_{d,q}}{L} + \underline{i}_{d,q}\,. \tag{I'}$$

Diese Gleichungen gehen z. B. aus der Dissertation von F. Blaschke:
« Das Verfahren der Feldorientierung zur Regelung der Drehfeldmaschine », TU Braunschweig 1974, Seiten 6-9, hervor, wenn man berücksichtigt, daß bei der Asynchronmaschine anstelle einer Erregerwicklung und einer Dämpferwicklung nur eine Kurzschlußwicklung im Läufer vorhanden ist.

Entsprechende Gleichungen sind z. B. auch in « Siemens-Forsch. -u. Entw.-Ber. », Nr. 1/1972, Seite 184, Gleichungen 2-6 angegeben. Die dort aufgestellten Gleichungen 1 und 7, die das elektrische Drehmoment der Maschine und die Berechnung der Winkelgeschwindigkeit des Läufers durch Verknüpfung des elektrischen und mechanischen Drehmoments beschreiben, werden nicht benötigt, da dem Flußrechner über die Läuferstellung λ die nötige Information über die Winkelgeschwindigkeit des Läufers eingegeben ist. Entsprechende Gleichungen gehen auch aus den in « Siemens-Forsch. -u. Entw.-Ber. », Nr. 1/1972, Seite 157-166 für den allgemeineren Fall (Synchronmaschine) im Läuferbezugssystem angegebenen Gleichungen hervor. Dort ist auch eine Schaltung zur Lösung dieser Differentialgleichungen angegeben, die sich auf die Bedürfnisse des hier verwendeten Flußrechners 20 übertragen läßt. Bei dieser angegebenen Schaltung ist ein mechanischer Teil vorgesehen, um durch Verknüpfung des elektrischen Drehmoment die Läuferstellung zu berechnen. Beim Flußrechner gemäß der Erfindung wird ein derartiger mechanischer Teil nicht benötigt, sondern durch die direkte Eingabe des Läuferstellungswinkels ersetzt.

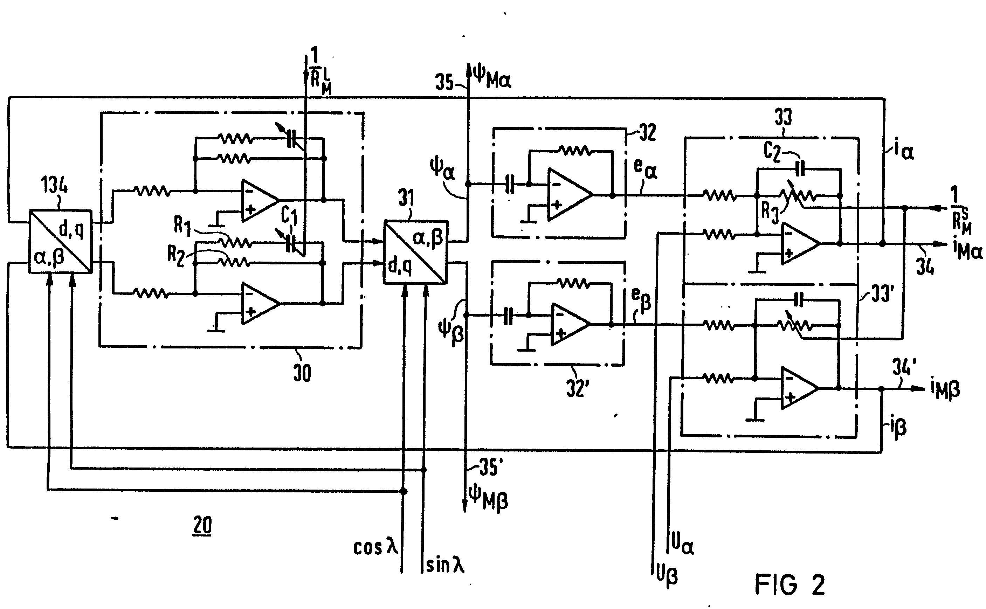

In Figur 2 ist der Innenaufbau des Flußrechners 20 schematisch dargestellt.

Bei dieser Schaltung wird in einem Fluß-Rechenglied 30 entsprechend (I') und (III) der Vektor $\underline{\psi}$ in den läuferbezogenen Koordinaten $\psi_d$, $\psi_q$ berechnet und anschließend entsprechend eingegebenen Winkelfunktionen sin λ, cos λ des Läuferstellungswinkels λ in ständerbezogene Koordinaten $\psi_\alpha$, $\psi_\beta$ umgerechnet (Transformationsschaltung 31). In Differenzierschaltungen (32, 32') wird daraus jeweils die ständerbezogene Komponente eα, eβ des EMK-Vektors

$$\underline{e} = \frac{d}{dt}\,\underline{\psi}$$

berechnet und in einem Strom-Rechenglied (33, 33') die ständerbezogene Komponente des Ständerstromvektors $\underline{i}$ ermittelt. Zur Eingabe in das Fluß-Rechenglied 30 werden diese ständerbezogenen Komponenten iα, iβ in einer Transformationsschaltung 134 wieder in das Läuferbezugssystem, in dem das Fluß-Rechenglied arbeitet, transformiert.

Zum Verständnis der in Figur 2 angegebenen Schaltung des Fluß-Rechengliedes 30 seien (III) und (I') zusammengefaßt zu

$$\frac{d\,\psi d}{dt} = -\frac{R^L}{L}\cdot\psi_d + R^L\cdot i_d - \frac{L^{\sigma L}}{L}\frac{d}{dt}\psi_d + L^{\sigma L}\frac{d}{dt}i_d$$

$$= R^L\cdot i_d + L^{\sigma L}\cdot\frac{d}{dt}i_d - \frac{R^L}{L}\psi_d - \frac{L^{\sigma L}}{L}\frac{d}{dt}\psi_d\,.$$

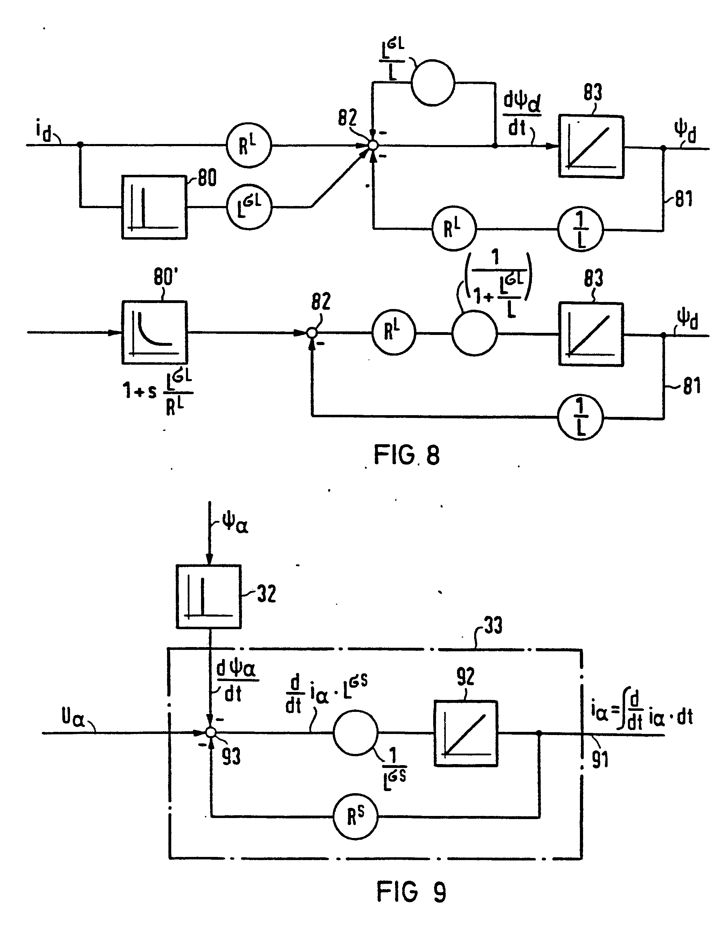

Im oberen Teil von Figur 8 ist eine entsprechende Schaltung schematisch dargestellt, bei der die ersten borden Produkte der rechten Seite aus $i_d$ mittels eines Differenziergliedes 80 und entsprechender Proportionalglieder $R^L$, $L^{6L}$ und das dritte Produkt aus der invertierten Ausgangsgröße $\psi_d$ mittels einer proportionalitätsbehafteten Rückführungsleitung 81 (Faktoren 1/L, $R^L$) gebildet sind. Einem Summenpunkt 82 sind diese drei Produkte sowie ein viertes Produkt zugeführt, so daß dadurch die Gleichung vollständig am Summenausgang ansteht, wenn das vierte Produkt nach Multiplikation mit $L^{\sigma L}/L$ und Inversion vom Summensignal d$\psi$d/dt gebildet ist. Das Summensignal ergibt durch Integration (Integrator 83) die gesuchte Flußkomponente $\psi_d$.

Der untere Teil von Figur 8 zeigt eine Vereinfachung dieser Schaltung, wobei nunmehr anstelle des Differenziergliedes 80 ein Zeitglied 80' mit dem Zeitverhalten

$$\left(1 + S\cdot\frac{L^{\sigma L}}{R}\right)$$

verwendet ist (S = Operator der Laplace-Transformation). Man kann diese Schaltung durch folgende Beziehungen beschreiben, die durch Laplace-Transformation erhalten werden :

$$S\frac{\psi_d}{R^L}\left(1 + \frac{L^{\sigma L}}{L}\right) = -\frac{\psi_d}{L} + i_d\cdot\left(1 + S\cdot\frac{L^{\sigma L}}{R^L}\right),$$

$$\psi_d\left(\frac{1}{L} + \frac{S}{R^L}\left(1 + \frac{L^{\sigma L}}{L}\right)\right) = i_d\left(1 + S\frac{L^{\sigma L}}{R^L}\right),$$

$$\psi_d = i_d\frac{1 + S\cdot L^{\sigma L}/R^L}{1/L + S\cdot(1 + L^{\sigma L}/L)/R^L}\,.$$

Diese Beziehungen führen zu der in Figur 2 angegebenen Schaltung, wenn $R_1$ proportional L, $R_2$ proportional $L^{6L}$ und $C_1$ proportional $1/R^L$ gesetzt werden. Das gleiche gilt für die Komponente $\psi_q$.

Zur Berechnung der Stromkomponenten $i\alpha$, $i\beta$ dienen jeweils Glättungsglieder 33, 33'. Denn Gleichung (II) kann umgeformt werden zu

$$L^\sigma\cdot\frac{d}{dt}i_\alpha = u_\alpha - \frac{d}{dt}\psi_\alpha - R^S\cdot i_\alpha\,.$$

Zur Darstellung kann eine Schaltung nach Figur 9 benutzt werden, wobei die am Differenzierglied 32 abgegriffene Komponente

$$-e_\alpha = -\frac{d}{dt}\psi_\alpha\,,$$

die Eingangsgröße u$\alpha$ sowie die am Ausgang 91 eines Integrators 92 abgegriffene Ausgangsgrößen i$\alpha$ — nach Verstärkung (Faktor $R^S$) und Inversion — einem Summenpunkt 93 zugeführt sind, wobei das Summensignal dem Integratoreingang zugeführt ist. Durch Vereinfachung ergibt sich die in Figur 2 angegebene Schaltung. Dabei ist die Ständer-Streuinduktivität L$\sigma$ durch den Kondensator $C_2$ und der reziproke Ständerwiderstand durch den Widerstand $R_3$ dargestellt. Dieser Aufbau des Flußrechners zur Lösung der Differentialgleichungen der Asynchronmaschine ist an sich aus dem angegebenen Stand der Technik bekannt. Für die Erfindung ist der Kondensatoren $C_1$ und der Widerstand $R_3$ proportional zu $1/R_M^L$ und $1/R_M^S$ veränderlich, um sie jeweils an die wahren Maschinenparameter $R^L$ und $R^S$

7

anzupassen. Ferner können die im Flußrechner berechneten Werte der Stromkomponenten $i\alpha$, $i\beta$ und/oder die Flußkomponenten $\psi\alpha$, $\psi\beta$ an Ausgängen 34, 34' bzw. 35, 35' herausgeführt werden. Die Stromkomponenten stellen Werte $i_M\alpha$, $i_M\beta$ dar, die der Parametereinstellung $R_M{}^L$, $R_M{}^S$ des Flußrechners entsprechen. Durch den Vektoranalysator 10 (Figur 1) können dann aus den Fluß-Komponenten $\psi_M\alpha$, $\psi_M\beta$ die Winkelsgnale $\sin \varphi_S$, $\cos \varphi_S$ gebildet werden, die dem Winkel $\varphi_S$ zwischen Flußachse und $\alpha$-Achse des Ständerbezugssystems entsprechen, wenn die Parameterwerte $R_M{}^S$ und $R_M{}^L$ des Flußrechners hinreichend genau auf die Maschinenparameter $R^S$ und $R^L$ eingestellt sind. Dabei ist allerdings zu beachten, daß der Flußrechner weitere Parameter, z. B. L, $L\sigma^L$ und $L\sigma^S$, benutzt, die für eine exakte Lagebestimmung des Flußvektors ebenfalls hinreichend genau eingestellt sein müssen.

Der im Flußrechner 20 errechnete Flußvektor $\underline{\psi}$ beschreibt den Fluß der Maschine um so exakter, je genauer die Parameterwerte $R_M{}^S$ für den Ständerwiderstand und $R_M{}^L$ für den Läuferwiderstand mit den entsprechenden Widerstandswerten der Asynchronmaschine übereinstimmen. Deshalb sind am Flußrechner 20 Eingabeeingänge vorgesehen, um die Parameterwerte auf die entsprechenden Maschinenwerte einzustellen.

Hierbei ist es in vielen Fällen erforderlich, die Temperaturabhängigkeit des Ständerwiderstandes $R^S$ der Maschine zu berücksichtigen. Bei der Ausführung nach Figur 1 geschieht dies dadurch, daß ein temperaturabhängiger Wert eingegeben wird, der dadurch erhalten wird, daß ein Ausgangswert $R_0{}^S$, der auf den Ständerwiderstand bei einer bestimmten Bezugstemperatur eingestellt ist, mit einer Korrekturfunktion der Ständerwicklungstemperatur $\theta^S$ multipliziert wird. In manchen Fällen genügt es, dem Eingang für $R_M{}^S$ ein Multipliziergliedd 23 vorzuschalten, in dem der Ausgangswert $R_0{}^S$ mit der Ständertemperatur $\theta^S$ multipliziert wird.

Zur Eingabe eines auf den Läuferwiderstand $R^L$ der Maschine abgestimmten LäuferwiderstandsParameterwertes $R_M{}^L$ ist dem entsprechenden Eingang des Flußrechners 20 eine Identifizierungsschaltung vorgeschaltet. Diese Identifizierungsschaltung beruht darauf, daß der Maschine und dem Flußrechner der gleiche Vektor für die Ständerspannung vorgegeben ist. Folglich gelten für Flußrechner und Maschine deckungsgleiche Kreisdiagramme, wobei lediglich die Schlupfskala für $R^L \ne R_M{}^L$ unterschiedlich ist.

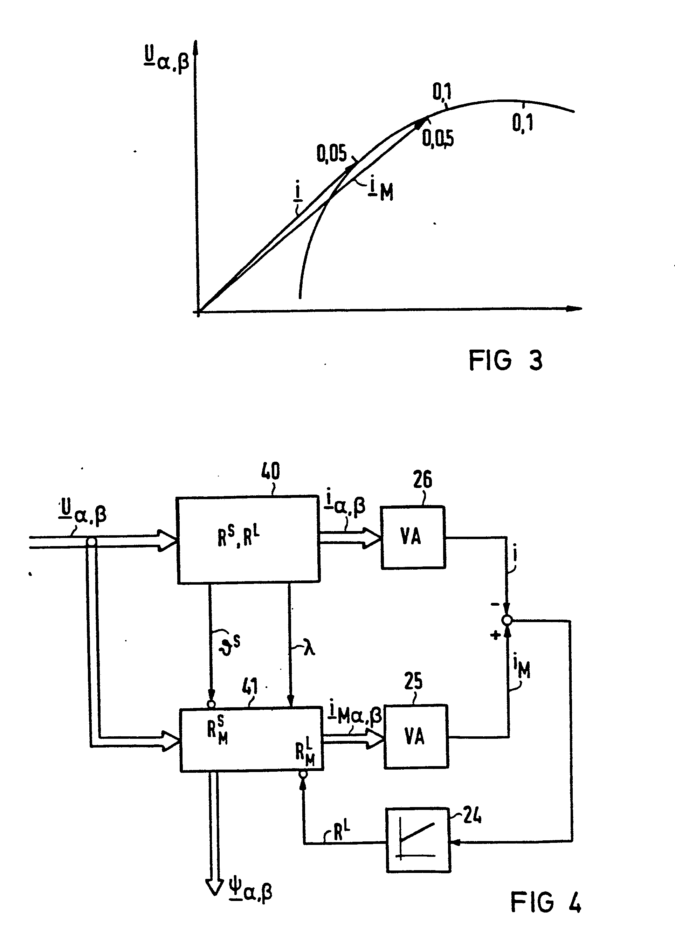

In Figur 3 ist das Kreisdiagramm aufgezeichnet, wobei die an der Außenseite des Kreises angebrachte Skala für die Maschine, die an der Innenseite angebrachte Skala für das Modell im Fall $R_M{}^L < R^L$ gilt. Zu dem in Figur 3 gezeigten Ständerstrom $\underline{i}$ der Maschine gehört z. B. der Schlupf 0,05. Durch die Läuferstellungseingabe ist dem Flußrechner 20 der gleiche Schlupf 0,05 eingegeben, so daß sich im Flußrechner der errechnete Ständerstrom $\underline{i}_M$ ergibt. In der Identifizierungsschaltung wird nun der eingegebene Läuferwiderstand-Parameter $R_M{}^L$ solange verändert, bis $\underline{i} = \underline{i}_M$ und somit auch $R^L = R_M{}^L$ gilt.

Zur Realisierung dieses Prinzips ist ein integraler Regler 24 am Eingabeeingang für $R_M{}^L$ des Flußrechners vorgesehen, dem jeweils eine bestimmende Größe des Ständerstromvektors $\underline{i}$ und ModellStänderstromvektors $\underline{i}_M$, der im Flußrechner bei der Lösung der entsprechenden Differentialgleichungen berechnet ist, zugeführt sind. Als bestimmende Größe können insbesondere jeweils die Beträge $i$ und $i_M$ des Ständerstromes und des im Flußrechner ermittelten Modell-Ständerstromes benutzt werden. Dabei gilt für $R^L - R_M{}^L > 0$ stets $i_M - i > 0$. Lediglich bei sehr kleinen Frequenzen und sehr kleinen Schlüpfen ist die Monotonie zwischen $i_M - i$ und $R^L - R_M{}^L$ gestört, so daß bei diesen extremen Betriebszuständen ggf. eine Vorzeichenumkehr berücksichtigt werden muß.

Die Bildung des Betrages $i_M$ des im Flußrechner berechneten Ständerstromvektors $\underline{i}_M$ kann auf einfache Weise mittels eines Vektoranalysators 25 geschehen, dem die im Ständerbezugssystem ermittelten Koordinaten $i_M\alpha$, $i_M\beta$ des im Flußrechner 20 berechneten Ständerstromvektors zugeführt sind. Analog wird der Betrag $i$ des Ständerstromes $\underline{i}$ der Maschine mittels eines Vektoranalysators 26 bestimmt, dem die kartesischen Koordinaten $i\alpha$, $i\beta$ des Maschinenstromes zugeführt sind. Diese kartesischen Komponenten werden dadurch gebildet, daß in zwei Maschinenleitungen R, S die Maschinenströme $i_R$, $i_S$ mittels Stromwandlern 27 abgegriffen und in einem Koordinatenwandler 28 ins kartesische Ständerbezugssystem transformiert werden.

In Figur 4 ist in vereinfachter Darstellung das Wesen der Schaltung nach Figur 1 wiederholt. Mit 40 ist das System Umrichter/Maschine bezeichnet, wobei der Ständerspannungsvektor durch den Doppelpfeil $\underline{U}\alpha\beta$ dargestellt ist, um damit anzuzeigen, daß es sich um die beiden Komponenten eines Vektors im Ständerbezugssystem handelt. Dieser Ständerspannungsvektor ist auch dem Flußrechner 41 eingegeben, der ferner von der Maschine die Information über die Ständerwicklungs-Temperatur $\theta^S$ (d. h. die Temperaturkorrektur für den eingestellten Ständerwiderstand-Parameterwertes $R_M{}^S$) und die Läuferstellung $\lambda$ erhält. Der Flußrechner 41 liefert die Information über Lage und Größe des ebenfalls durch einen Doppelpfeil $\psi\alpha\beta$ symbolisierten Flußvektor, die von der Umrichtersteuerung benötigt wird. Die Läuferwiderstand-Identifizierungsschaltung besteht im wesentlichen aus den beschriebenen Vektoranalysatoren 25 und 26 und dem integralen Regler 24, wobei die beiden Ständerstromvektoren wiederum durch Doppelpfeile $\underline{i}\alpha\beta$ und $\underline{i}_M\alpha\beta$ angedeutet sind.

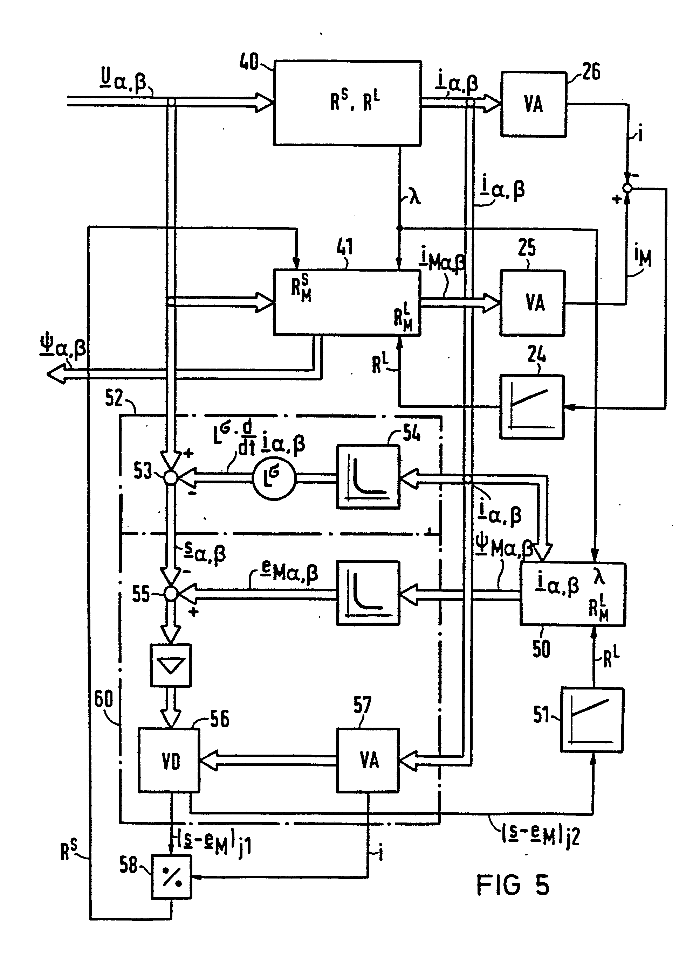

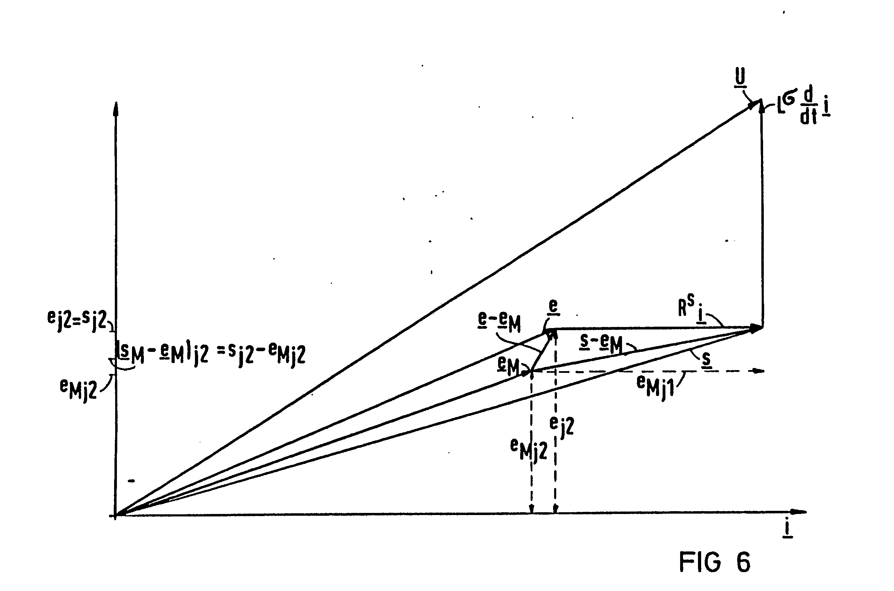

Die Ausführungsbeispiele nach den Figuren 5 und 6 betreffen eine andere Schaltung zur Identifizierung des Läuferwiderstandes und/oder Ständerwiderstandes der Asynchronmaschine, die auf der Verwendung einer als « Strommodell » bezeichneten Rechenmodellschaltung 50 beruht. Dieses Strommodell zur Identifizierung des Läuferwiderstandes und ggf. des Ständerwiderstandes ist in der gleichzeitig eingereichten europäischen Patentanmeldung 81 106 740.4, veröffentlicht durch EP-A1-47900 mit dem Titel « Verfahren und Vorrichtung zum Ermitteln des Läuferwiderstandes einer Asynchronmaschine » des gleichen Anmelders beschrieben, denen Inhalt hier nur in groben Zügen beschrieben werden soll.

Die Rechenmodellschaltung 50 geht von dem der Asynchronmaschine eingeprägten Ständerstromvektor $\underline{i}$ aus und bedient sich als weiterer Information des an der Asynchronmaschine abgegriffenen Läuferstellungswinkels $\lambda$. Auch dem Strommodell ist ein Läuferwiderstand-Parameterwert $R_M{}^L$ eingegeben und mittels dieses Parameterwertes wird in einer die dynamischen Vorgänge in der Asynchronmaschine nachbildenden Modellschaltung ein Modellvektor für den Flußvektor der Maschine berechnet. Da in diesem Fall dem Strommodell 50 und der Asynchronmaschine der gleiche Ständerstromvektor eingeprägt ist, ergeben sich auch hier dekkungsgleiche Kreisdiagramme mit unterschiedlicher Schlupfskalierung für den Fall $R_M{}^L \neq R^L$. Da aber dem Strommodell zu jeder Zeit die tatsächliche Läuferstellung und damit der tatsächliche Schlupf vorgegeben ist, unterscheidet sich der Modellflußvektor $\underline{\psi}_M$ von dem tatsächlichen Flußvektor $\underline{\psi}$. Ebenso unterscheidet sich auch der durch Differentiation aus dem Modellflußvektor hervorgehende Modell-EMK-Vektor $\underline{e}_M$ von dem EMK-Vektor $\underline{e}$ der Maschine. Daher ist dem Eingang des Strommodells für den Läuferwiderstand-Parameterwert ein Läuferwiderstandparameter-Regler 51 vorgeschaltet, dem die Abweichung zwischen einer den EMK-Vektor $\underline{e}$ der Maschine bestimmenden Größe und einer entsprechenden, den Modell-EMK-Vektor $\underline{e}_M$ bestimmenden Größe zugeführt ist. Mittels des Reglers 51 wird nun der Läuferwiderstand-Parameterwert $R_M{}^L$ solange verändert, bis die beiden EMK-Vektoren $\underline{e}$, $\underline{e}_M$ zusammenfallen, d. h. am Reglereingang die Differenz der bestimmenden Größen verschwindet. Am Reglerausgang steht dann ein Wert an, der mit hinreichender Genauigkeit dem Läuferwiderstand $R^L$ entspricht.

Prinzipiell können für den Abgleich am Regler 51 anstelle der EMK-Vektoren die entsprechenden Flußvektoren verwendet werden. Hierzu kann mittels eines EMK-Detektors aus dem Ständerspannungsvektor $\underline{U}$ durch Subtraktion des ohmschen Spannungsbfalles und der induktiven Streuspannung und Integration der Flußvektor $\underline{\psi}$ der Maschine gebildet werden. In einer anschließenden Rechenschaltung wird dann die Differenz zweier die jeweiligen Vektoren $\underline{\psi}$, $\underline{\psi}_M$ bestimmenden Größen gebildet und dem Regler 51 zugeführt. Dienen als bestimmende Größen die Beträge der Vektoren, so sind die Komponenten der Vektoren jeweils einem Vektoranalysator und die an den Vektoranalysatoren anstehenden Werte der Vektorbeträge einer Subtraktionsstufe zugeführt.

Es ist schaltungstechnisch einfacher, für den Abgleich des Läuferwiderstandes nicht von den Flußvektoren, sondern von den EMK-Vektoren auszugehen. Die Rechenschaltung enthält dann eine Differenzierstufe, um durch komponentenweises Differenzieren des Modell-Flußvektors $\underline{\psi}_M$ den Modell-EMK-Vektor $\underline{e}_M$ zu erhalten. Bei der Schaltung nach Figur 5 wird jedoch nicht von den Beträgen der EMK-Vektoren, sondern von deren zum Ständerstromvektor $\underline{i}$ senkrechten Komponenten (Blindkomponenten, Index j2) ausgegangen. Da der ohmsche Spannungsabfall ein reiner Wirkspannungsabfall ist und daher einen in Richtung des Ständerstromvektors zeigenden Vektor darstellt, trägt der ohmsche Spannungsabfall nicht zur Blindkomponente des EMK-Vektors bei. Dadurch ergibt sich für den EMK-Detektor eine Vereinfachung, die gleichzeitig auch eine Identifizierung des Ständerwiderstandes der Maschine zuläßt.

Nach Figur 5 wird im EMK-Detektor 52 vom Ständerspannungsvektor $\underline{U}$ der Vektor der induktiven Streuspannung komponentenweise subtrahiert (Subtraktionspunkt 53). Der induktive Streuspannungsvektor ergibt sich durch komponentenweise Differentiation (Differenzierstufe 54) des Ständerstromvektors und Multiplikation mit einem die Streuinduktivität der Ständerwicklungen beschreibenden Parameter $L\sigma$. Da im EMK-Detektor 52 auf die zur EMK-Berechnung an sich erforderliche Subtraktion des ohmschen Spannungsabfalles verzichtet wird, liefert der EMK-Detektor anstelle der kartesischen ständerbezogenen Komponenten des EMK-Vektors die entsprechenden Komponenten $s\alpha$, $s\beta$ des Summenvektors $\underline{s}$ aus dem EMK-Vektor und dem Vektor des ohmschen Spannungsabfalls (Figur 6). Da die kartesischen Komponenten eines Differenzvektors aus zwei Vektoren gleich den Differenzen der entsprechenden Komponenten der Vektoren sind, wird die dem Regler 51 einzugebende Differenz der Blindkomponenten von $\underline{s}$ und $\underline{e}_M$ gebildet, indem zunächst durch komponentenweise Subtraktion (Subtraktionsstelle 55) der Differenzvektor $\underline{s} - \underline{e}_M$ gebildet wird. Nach anschließender Verstärkung werden die kartesischen Komponenten dieses Differenzvektors einem Vektordreher 56 aufgeschaltet, der diesen Vektor in ein mit dem Ständerstromvektor umlaufendes Koordinatensystem transformiert. Hierzu werden dem Vektordreher die Größen $\sin \gamma$, $\cos \gamma$ zugeführt, wobei $\gamma$ die Richtung des Ständerstromvektors im kartesischen Ständerbezugssystem darstellt. Diese Information über die Richtung des Ständerstromvektors wird von einem Vektoranalysator 57 gebildet, dem die kartesischen Komponenten $i\alpha$, $i\beta$ des Ständerstromvektors der Maschine zugeführt sind. Der Vektoranalysator 57 berechnet auch den Betrag $i$ des Ständerstromvektors, der dem Divisoreingang eines Dividiergliedes 58 zugeführt ist.

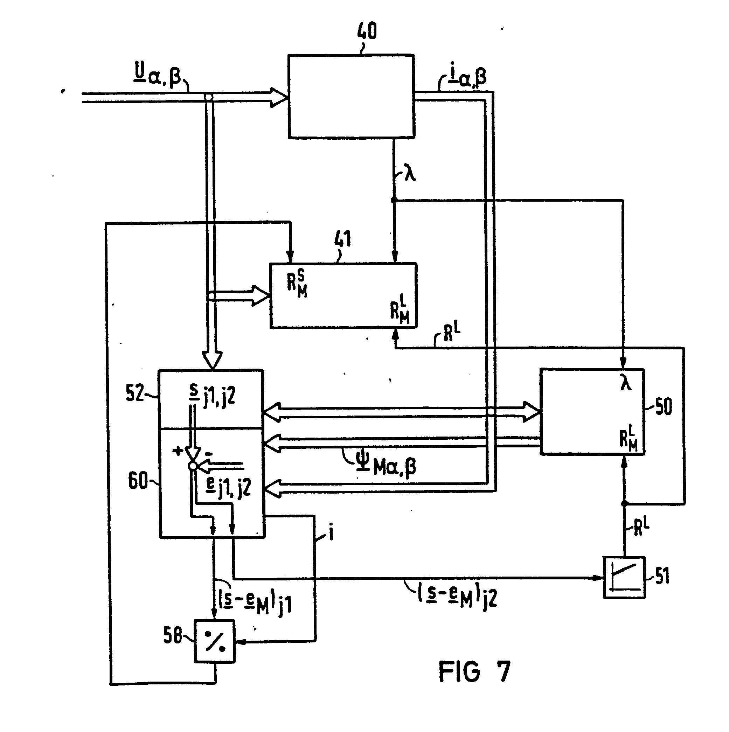

Am Ausgang des Vektordrehers 56 stehen somit die mit den Indizes j1 und j2 bezeichneten Komponenten des Differenzvektors $(\underline{s} - \underline{e}_M)$ an. Die Blindkomponente $(\underline{s} - \underline{e}_M)$ j2 des Differenzvektors ist nach den vorstehenden Erläuterungen gleich der Differenz $e_{j2} - e_{Mj2}$ der Blindkomponenten des Maschinen-EMK-Vektors $\underline{e}$ und des Modell-EMK-Vektors $\underline{e}_M$. Diese Differenz wird dem Eingang des Reglers 51 zugeführt und bewirkt die Nachstellung des Parameterwertes $R_M{}^L$ in der Rechenmodellschaltung 50. Bei erfolgtem Abgleich von Maschine und Modell stimmt die Blindkomponente $e_{j2}$ des Maschinen-EMK-Vektors $\underline{e}$ mit der entsprechenden Blindkomponente $e_{Mm2}$ des Modell-EMK-Vektors überein, die Wirkkomponente des Differenzvektors $\underline{s} - \underline{e}_M$ ist jedoch gleich dem ohmschen Spannungsabfall $R^S \cdot i$ an den Ständerwicklungen der Maschine. Wird daher die Wirkkomponente $(\underline{s} - \underline{e}_M)_{j1}$ dem Dividendeneingang des Dividierers 58 aufgeschaltet, so steht an dessen Ausgang ein mit dem Ständerwiderstand $R^S$ der Maschine hinreichend übereinstimmender Wert an. Dieser Wert kann nun dem Flußrechner 41 als Ständerwiderstand-Parameterwert $R_M^S$ eingegeben werden. Zur Eingabe des entsprechenden Läuferwiderstand-Parameterwertes $R_M^L$ in den Flußrechner 41 kann z. B. auch die anhand der Figur 4 bereits erläuterte Identifitzierungsschaltung mit den Vektoranalysatoren 25 und 26 und dem integralen Regler 24 verwendet werden. Es kann aber andererseits auch der am Ausgang des Läuferwiderstands-Parameter-Reglers 51 anstehende Wert für den identifizierten Läuferwiderstand $R^L$ der Maschine dem Flußrechner 41 zugeführt werden. Dann entfallen die Elemente 24, 25, 26 und es ergibt sich die in Figur 7 dargestellte Schaltung.

Gegenüber der bekannten Vorrichtung, bei der die für die Umrichtersteuerung nötige Information über den Maschinenflußvektor mittels eines Spannungsmodells gebildet wird, gestattet es die Vorrichtung nach der Erfindung, das dem Spannungsmodell bei niedrigeren Drehzahlen überlegene Strommodell anzuwenden, wobei jedoch eine Fehljustierung der Widerstandsparameter $R_M^S$, $R_M^L$ und eine damit verbundene Fehlberechnung des Flußvektors durch die Verwendung des Flußrechners gemäß der Erfindung vermieden werden.

**Patentansprüche**

1. Vorrichtung zum Betrieb einer umrichtergespeisten Asynchronmaschine (1) mit einem Flußrechner (20), der aus Werten für den Ständerstrom vektor ($i\alpha$, $i\beta$), den gemessenen Läuferdrehwinkel ($\lambda$) und den Parameterwert für den Läuferwiderstand ($R^L$) den Flußvektor ($\psi\alpha$, $\psi\beta$) ermittelt, und einer Umrichtersteuerung (5), die aus der ermittelten Lage (sin $\varphi_s$, cos $\varphi_s$) des Flußvektors und eingegebenen, die zum Flußvektor parallele und die dazu senkrechte Komponente ($i^*\varphi_1$, $i^*\varphi_2$) des Ständerstromvektors festlegenden Sollwerten die Steuergrößen für die Ansteuerung der Umrichterventile bildet, gekennzeichnet durch eine Rechenschaltung, die den Wert des Ständerstromvektors ($i\alpha$, $i\beta$) aus dem errechneten Wert des Flußvektors ($\psi\alpha$, $\psi\beta$) und dem eingegebenen Istwert des Ständerspannungsvektors ($U\alpha$, $U\beta$) berechnet.

2. Vorrichtung nach Anspruch 1, dadurch gekennzeichnet, daß der Flußrechner (20) einen Eingabeeingang zur Eingabe eines veränderbaren Parameterwertes ($R_M^L$) für den Läuferwiderstand aufweist (Fig. 1).

3. Vorrichtung nach Anspruch 2, dadurch gekennzeichnet, daß am Flußrechner (20) eine den im Flußrechner ermittelten, zu einer Lösung gehörenden Ständerstromvektor (Modell-Ständerstrom, Komponenten $i_M\alpha$, $i_M\beta$) bestimmende Größe (Vektorbetrag $i_M$) abgegriffen ist, daß aus den Ständerströmen ($i_R$, $i_S$) eine entsprechende, den Ständerstromvektor (Komponenten $i\alpha$, $i\beta$) der Maschine bestimmende Größe (Vektorbetrag $i$) gebildet ist, und daß am Eingabeeingang für den Läuferwiderstand-Parameterwert ($R_M^L$) ein integraler Regler (24) vorgesehen ist, dem die Differenz ($i_M - i$) der beiden bestimmenden Größen zugeführt ist (Fig. 1).

4. Vorrichtung nach Anspruch 2, dadurch gekennzeichnet, daß ein EMK-Detektor (52), der aus Ständerstrom ($i\alpha, \beta$) und Ständerspannung ($U\alpha, \beta$) eine die EMK der Maschine (40) bestimmende Größe ($S_{j2}$) ermittelt, eine Rechenmodellschaltung (50), die ausgehend vom Ständerstrom ($i\alpha, \beta$), der Läuferstellung ($\lambda$) der Maschine und einem einstellbaren Parameterwert ($R_M^L$) für den Läuferwiderstand, die zur Entstehung des magnetischen Flusses führenden Vorgänge nachbildet und einen Modell-Flußvektor ($\psi_M\alpha, \beta$) errechnet, eine Rechenstufe (60), die die Differenz der die Maschinen-EMK bestimmenden Größe ($S_{j2}$) und einer aus dem Modellfluß abgeleiteten, die EMK des Modells bestimmenden Größe ($e_{Mj2}$) berechnet, und ein Läuferwiderstandparameter-Regler (51) vorgesehen ist, dem die Differenz ($(\underline{s} - \underline{e}_M)_{j2}$) zugeführt ist und dessen Ausgang den Eingabeeingängen für den Läuferwiderstand-Parameterwert der Rechenmodellschaltung (50) und des Flußrechners (41) zugeführt ist (Fig. 5 und Fig. 7).

5. Vorrichtung nach Anspruch 4, dadurch gekennzeichnet, daß in der Rechenschaltung (60) der vom EMK-Detektor (52) gebildete EMK-Vektor ($\underline{e}\alpha, \beta$) und ein durch Differentiation aus dem Modellfluß-Vektor ($\psi_M\alpha, \beta$) gebildeter EMK-Modellvektor ($\underline{e}_M\alpha, \beta$) einer Einrichtung zugeführt ist, die mittels wenigstens eines Vektoranalysators und eines Subtraktionsgliedes die als Differenz der bestimmenden Größen dienende Differenz der Beträge ($e$, $e_M$) dieser Vektoren bildet.

6. Vorrichtung nach Anspruch 4, dadurch gekennzeichnet, daß in der Rechenschaltung (60) der vom EMK-Detektor (52) gebildete EMK-Vektor ($\underline{s}\alpha, \beta$) und ein durch Differentiation aus dem Modellflußvektor ($\psi_M\alpha, B$) gebildeter EMK-Modellvektor ($\underline{e}_M\alpha, \beta$) einer Einrichtung (55, 56, 57) zugeführt ist, die wenigstens einen Vektordreher (56) und ein Subtraktionsglied (55) enthält zur Bildung der als Differenz der bestimmenden Größen dienenden zum Ständerstromvektor ($i\alpha, \beta$) senkrechten Komponente ($(\underline{s} - \underline{e}_M)_{j1}$) der Differenz ($\underline{s} - \underline{e}_M$) der Vektoren (Fig. 5).

7. Vorrichtung nach Anspruch 6, dadurch gekennzeichnet, daß der EMK-Detektor aus dem Ständerstromvektor ($U\alpha, \beta$) durch Abzug der induktiven Streuspannung

$$\left( L^\sigma \cdot \frac{d}{dt} i_{\alpha, \beta} \right)$$

den Summenvektor ($\underline{s}\alpha,\beta$) aus EMK und ohmschen Ständerspannungabfall ermittelt und als EMK-Vektor der Maschine diesen Summenvektor der Rechenschaltung (60) zuführt (Fig. 5).

8. Vorrichtung nach einem der Ansprüche 1 bis 7, dadurch gekennzeichnet, daß der Flußrechner (20) einen Eingabeeingang zur Eingabe eines einstellbaren Parameterwertes ($R_M{}^S$) für den Ständerwiderstand ($R^S$) der Maschine enthält (Fig. 1).

9. Vorrichtung nach Anspruch 8, dadurch gekennzeichnet, daß am Eingang ein von der Ständertemperatur ($\theta^S$) beaufschlagtes Rechenglied (23) vorgesehen ist, das durch Korrektur eines temperaturunabhängigen Ausgangswertes ($R_O{}^S$) mit einer Temperatur-Korrekturfunktion ($\theta^S$) einen temperaturabhängigen Ständerwiderstand-Parameterwert ($R_M{}^S$) bildet (Fig. 1).

10. Vorrichtung nach Anspruch 7 und Anspruch 8, dadurch gekennzeichnet, daß die Rechenschaltung (60) mittels des Subtraktionsgliedes (55) und des Vektordrehers (56) auch die Differenz ($(\underline{s} - \underline{e}_M)_{j1}$) der ständerstromparallelen Komponenten des Summenvektors ($\underline{s}\alpha,\beta$) und des EMK-Modellvektors ($\underline{e}_M\alpha,\beta$) bildet, diese Differenz dem Dividendeneingang eines Dividierers (58) zugeführt ist, dessen Divisoreingang der aus dem Ständerstrom ($\underline{i}\alpha,\beta$) gebildete Betrag des Ständerstromvektors zugeführt ist und dessen Ausgang auf den Eingabeeingang des Flußrechners (41) für den Ständerwiderstand-Parameterwert ($R_M{}^S$) aufgeschaltet ist (Fig. 5 und Fig. 7).

## Claims

1. A device for operating a converter-fed asynchronous machine (1) having a flow calculator (20) which determines the flow vector ($\psi\alpha,\psi\beta$) from values for the stator current vector ($i\alpha,i\beta$), the measured rotor angle of rotation ($\lambda$) and the parameter value for the rotor resistance ($R^L$), and having a converter control unit (5) which forms the control magnitudes for the control of the converter switching elements from the determined position ($\sin\varphi_s$, $\cos\varphi_s$) of the flow vector and input theoretical values which determine the component ($i^*\varphi,i^*\varphi_2$) of the stator current vector parallel to the flow vector and at right angles thereto characterised by a calculating circuit which calculates the value of the stator current vector ($i\alpha,i\beta$) from the calculated value of the flow vector ($\psi\alpha,\psi\beta$) and the actual input value of the stator voltage vector ($U\alpha,U\beta$).

2. A device as claimed in Claim 1, characterised in that the flow calculator (20) possesses an input for a variable parameter value ($R_M{}^L$) for the rotor resistance (Fig. 1).

3. A device as claimed in Claim 2, characterised in that a magnitude (vector value $i_M$) which determines the stator current vector (model stator current, components $i_M\alpha,i_M\beta$) assigned to a solution and determined in the flow calculator, is tapped at the flow calculator (20), that a corresponding magnitude (vector amount i), which determines the stator current vector (components $i\alpha,i\beta$) of the machine is formed from the stator currents ($i_R,i_S$), and that at the input for the rotor resistance parameter value ($R_M{}^L$) an integral regulator (24) is arranged, to which the difference ($i_M - i$) of the two determining magnitudes is fed (Fig. 1).

4. A device as claimed in Claim 2, characterised in that there are provided an EMF detector (52) determining a magnitude ($S_{j2}$), which determines the EMF of the machine (40) from the stator current ($\underline{i}\alpha,\beta$) and the stator voltage ($\underline{U}\alpha,\beta$), a calculating model circuit (50) which starting from the stator current ($\underline{i}\alpha,\beta$), the rotor position ($\lambda$) of the machine and an adjustable parameter value ($R_M{}^L$) for the rotor resistance, simulates the processes which lead to the production of the magnetic flux, and calculates a model flow vector ($\underline{\psi}_M\alpha,\beta$), a calculating stage (60) which calculates the difference of the magnitude ($S_{j2}$), which determines the machine EMF, and a magnitude ($e_{Mj2}$) which is derived from the model flow and determines the EMF of the model, and a rotor resistance parameter regulator (51), to which the difference [$(\underline{s} - \underline{e}_M)_{j2}$] is supplied and whose output is fed to the inputs for the rotor resistance parameter value of the calculating model circuit (50) and the flow calculator (41), (Fig. 5 and Fig. 7).

5. A device as claimed in Claim 4, characterised in that in the calculating circuit (60) the EMF vector ($\underline{e}\alpha,\beta$) and an EMF model vector ($\underline{e}_M\alpha,\beta$), which is formed by differentiation from the model flow vector ($\underline{\psi}_M\alpha,\beta$) is fed to a device which forms the difference of the values ($e,e_M$) of the vectors, which serves as difference of the determining magnitudes, by means of at least one vector analyser and one subtraction element.

6. A device as claimed in Claim 4, characterised in that in the calculating circuit (60) the EMF vector ($e\alpha,\beta$) and an EMF model vector ($\underline{e}_M\alpha,\beta$), which is formed by differentiation from the model flow vector ($\underline{\psi}_M\alpha,\beta$) is fed to a device (55, 56, 57) which comprises at least one vector rotator (56) and a subtraction element (55) in order to form the component [$(\underline{s} - \underline{e}_M)_{j1}$] of the difference ($\underline{s} - \underline{e}_M$) of the vectors which is at right angles to the stator current vector ($\underline{i}\alpha,\beta$) and serves as difference of the determining magnitudes (Fig. 5).

7. A device as claimed in Claim 6, characterised in that the EMF detector determines the sum vector ($\underline{s}\alpha,\beta$) from EMF and ohmic stator voltage drop from the stator current vector ($\underline{U}\alpha,\beta$) by reduction of the inductive stray voltage

$$\left( L^\sigma \cdot \frac{d}{dt}\underline{i}_{\alpha,\beta} \right)$$

and feeds the sum vector to the calculating circuit (60) as an EMF vector of the machine (Fig. 5).

8. A device as claimed in one of Claims 1 to 7, characterised in that the fow calculator (20) comprises an input for an adjustable parameter value ($R_M{}^S$) for the stator resistance ($R^S$) of the machine (Fig. 1).

9. A device as claimed in Claim 8, characterised in that a calculating element (23) is arranged at the input which is controlled by the stator temperature ($\theta^S$) and which forms a temperature-dependent stator resistance parameter value ($R_M{}^S$), by correction of a temperature independent output value ($R_O{}^S$) with a temperature correction function ($\theta^S$) (Fig. 1).

10. A device as claimed in Claim 7 and Claim 8, characterised in that by means of the subtraction element (55) and the vector rotator (56) the calculating circuit (60) equally forms the difference (($\underline{s} - \underline{e}_M)_{j1}$) of the components of the sum vector ($\underline{s}\alpha,\beta$) and the EMF model vector ($\underline{e}_M\alpha,\beta$) which are parallel to the stator current, the difference is fed to the dividend input of a divisor (58), whose divisor input is supplied with the value of the stator current vector formed from the stator current ($\underline{i}\alpha,\beta$) and whose output is connected to the input of the flow calculator (41) for the stator resistance parameter value ($R_M{}^S$), (Fig. 5 and Fig. 7).

## Revendications

1. Dispositif pour le fonctionnement d'une machine asynchrone (1) alimentée par un convertisseur de fréquence, comportant un calculateur de flux (20), qui détermine le vecteur du flux ($\psi\alpha,\psi\beta$) à partir de valeurs du vecteur du courant statorique ($i\alpha,i\beta$), de l'angle mesuré ($\lambda$) de rotation du rotor et de la valeur paramétrique de la résistance du rotor ($R^L$), et un dispositif (5) de commande du convertisseur de fréquence, qui forme les grandeurs de commande des valves du convertisseur de fréquence à partir de la position déterminée ($\sin\varphi_s$, $\cos\varphi_s$) du vecteur du flux et à partir de valeurs de consigne introduites déterminant les composantes ($i^*\varphi_1,i^*\varphi_2$) du vecteur du courant statorique, parallèle et perpendiculaire au vecteur du flux, caractérisé par un circuit de calcul, qui calcule la valeur du vecteur du courant statorique ($i\alpha,i\beta$) à partir de la valeur calculée du vecteur du flux ($\psi\alpha,\psi\beta$) et à partir de la valeur réelle introduite du vecteur de la tension statorique ($U\alpha,U\beta$).

2. Dispositif suivant la revendication 1, caractérisé par le fait que le calculateur de flux (20) comporte une entrée servant à l'introduction d'une valeur paramétrique variable ($R_M{}^L$) pour la résistance du rotor (figure 1).

3. Dispositif suivant la revendication 2, caractérisé par le fait qu'une grandeur (valeur vectorielle $i_M$) déterminant le vecteur du courant statorique (courant statorique modèle, composantes ($i_M\alpha,i_M\beta$) déterminée dans le calculateur de flux et fournissant une solution) est prélevée dans le calculateur de flux (20), qu'une grandeur correspondante (valeur vectorielle i), qui détermine le vecteur du courant statorique (composantes $i\alpha,i\beta$), de la machine, est formée à partir des courants statoriques ($i_R$, $i_S$), et qu'à l'entrée d'introduction de la valeur paramétrique ($R_M{}^L$) de la résistance du rotor, il est prévu un régulateur à action intégrale (24) auquel est envoyée la différence ($i_M - i$) des deux grandeurs déterminantes (figure 1).

4. Dispositif suivant la revendication 2, caractérisé par le fait qu'il est prévu un détecteur de la force électromotrice (52), qui détermine une grandeur ($S_{j2}$) déterminant la force électromotrice de la machine (40), à partir du courant statorique ($\underline{i}\alpha,\beta$) et de la tension statorique ($\underline{U}\alpha,\beta$), un circuit du modèle de calcul (50), qui simule, à partir du courant statorique ($\underline{i}\alpha,\beta$), de la position ($\lambda$) du rotor de la machine et d'une valeur paramétrique réglable ($R_M{}^L$) pour la résistance du rotor, les processus conduisant à l'apparition du flux magnétique et calcule un vecteur du flux modèle ($\underline{\psi}_M,\beta$), un étage de calcul (60), qui calcule la différence de la grandeur ($S_{j2}$) déterminant la force électromotrice de la machine et une grandeur ($e_{Mj2}$) dérivée du flux modèle et déterminant la force électromotrice du modèle, et un dispositif (51) de réglage du paramètre de la résistance du rotor, auquel est envoyée la différence (($\underline{s} - \underline{e}_M)_{j2}$) et dont la sortie est raccordée aux entrées d'introduction de la valeur paramétrique de la résistance du rotor du circuit du modèle de calcul (50) et du calculateur de flux (41) (figure 5 et figure 7).

5. Dispositif suivant la revendication 4, caractérisé par le fait que, dans le circuit de calcul (60), le vecteur de la force électromotrice ($\underline{e}\alpha,\beta$) formé par le détecteur de la force électromotrice (52), et un vecteur modèle de la force électromotrice ($\underline{e}_M\alpha\beta$) formé par différentiation à partir du vecteur du flux modèle ($\underline{\psi}_M\alpha,\beta$) sont envoyés à un dispositif qui forme, à l'aide au moins d'un analyseur vectoriel et d'un circuit de soustraction, la différence des valeurs (e, $e_M$) de ces vecteurs, utilisée comme différence des grandeurs déterminantes.

6. Dispositif suivant la revendication 4, caractérisé par le fait que dans le circuit de calcul (60) le vecteur de la force électromotrice ($\underline{s}\alpha,\beta$) formé par le détecteur de la force électromotrice (52) et un vecteur modèle de la force électromotrice ($\underline{e}_M\alpha,\beta$) formé par différentiation à partir du vecteur du flux modèle ($\underline{\psi}_M\alpha,\beta$) sont envoyés à un dispositif (55, 56, 57) qui contient au moins un dispositif de rotation vectorielle (56) et un circuit de soustraction (55) en vue de former la composante (($\underline{s} - \underline{e}_M)_{j1}$), utilisée comme différence des grandeurs déterminantes et perpendiculaire au vecteur du courant statorique ($\underline{i}\alpha,\beta$), de la différence ($\underline{e} - e_M$) des vecteurs (figure 5).

7. Dispositif suivant la revendication 6, caractérisé par le fait que le détecteur de la force électromotrice détermine, à partir du vecteur du courant statorique ($\underline{U}\alpha,\beta$) et par soustraction de la tension de fuite inductive

**0 047 893**

$$\left( L^{\sigma} \cdot \frac{d}{dt} i_{\alpha,\beta} \right),$$

le vecteur somme $(s_{\alpha,\beta})$ au moyen de la force électromotrice et de la chute ohmique de tension statorique, et envoie comme vecteur de la force électromotrice de la machine ce vecteur somme au circuit de calcul (60) (figure 5).

8. Dispositif suivant l'une des revendications 1 à 7, caractérisé par le fait que le calculateur de flux (20) contient une entrée d'introduction d'une valeur paramétrique réglable $(R_M{}^S)$ pour la résistance pour une valeur $(R^S)$ du stator de la machine (figure 1).

9. Dispositif suivant la revendication 8, caractérisé par le fait qu'il est prévu à l'entrée un circuit de calcul (23) chargé par la température $(\theta^S)$ du stator et qui forme, par suite de la correction d'une valeur initiale $(R_O{}^S)$, dépendant de la température, à l'aide d'une fonction $(\theta^S)$ de correction de la température, une valeur paramétrique $(R_M{}^S)$ de la résistance du stator, qui est fonction de la température (figure 1).

10. Dispositif suivant les revendications 7 et 8, caractérisé par le fait que le circuit de calcul (60) forme également, au moyen du circuit de soustraction (55) du dispositif de rotation vectorielle (56), la différence $((\underline{e} - \underline{e}_M)_{j1})$ des composantes, parallèles au courant statorique, du vecteur somme $(s_{\alpha,\beta})$ et du vecteur modèle de la force électromotrice $(\underline{e}_M\alpha,\beta)$, que cette différence est envoyée à l'entrée du dividende d'un diviseur (58), à l'entrée du diviseur duquel est envoyée la valeur du vecteur du courant statorique, formée à partir du courant statorique $(i_{\alpha,\beta})$ et dont la sortie est raccordée à l'entrée du calculateur de flux (41) pour la valeur paramétrique $(R_M{}^S)$ de la résistance du stator (figure 5 et figure 7).

13

FIG 1

FIG 2

FIG 3

FIG 4

FIG 5

FIG 6

FIG 7

FIG. 8

FIG 9